# EUROPEAN PATENT SPECIFICATION

(11) **EP 4 483 118 B1**
(45) Date of publication and mention of the grant of the patent: **09.12.2026**
(21) Application number: 23713987.8
(22) Date of filing: 22.02.2023
(51) Int. Cl.: F28F 27/02

(54) **FLUID FLOW CONTROLLING DEVICE AND SYSTEM**
FLUIDSTROMSTEUERUNGSVORRICHTUNG UND SYSTEM
DISPOSITIF ET SYSTÈME DE RÉGULATION D'ÉCOULEMENT DE FLUIDE

(30) Priority: 24.02.2022 US 202263313467 P
(43) Date of publication of application: 01.01.2025
(73) Proprietor: Tesla, Inc., Austin, TX 78725 (US)
(72) Inventor: NABOVATI, Aydin, Austin, Texas 78725 (US); NASR, Mohamed Haitham Helmy, Austin, Texas 78725 (US); KHOOBYAR, Anahid, Austin, Texas 78725 (US); COLLISS, Simon, Austin, Texas 78725 (US); TIAN, Richard, Austin, Texas 78725 (US); MISRAK, Abel, Austin, Texas 78725 (US)
(74) Representative: Liesegang, Eva
(86) International application number: PCT/US2023/013601
(87) International publication number: WO 2023/163976

(56) References cited:
- DE-A1- 102010 038 773
- US-A1- 2020 406 783
- US-A1- 2021 091 432
- US-A1- 2021 210 811

## Description

### TECHNICAL FIELD

The present disclosure relates generally to flow control systems, and more specifically to passive fluid flow controlling devices and systems.

### BACKGROUND

Electronic devices can generate heat during operation. For example, in a vehicle, such as an electric vehicle, there are electronic components and devices that generate heat. A cooling system is desired for dissipating heat and operating the electronic components within their target operating temperature range.

DE 10 2010 038 773 A1 describes A Battery cooling system, in particular for a hybrid or electric vehicle, with a chiller for heat transfer between a refrigerant circuit and a coolant circuit and with a bypass assigned to the chiller, such that at a predetermined volume flow the respectively desired cooling capacity in the chiller can be transferred by its regulated or controlled distribution to the chiller or to the bypass

US 2020/406783 A1 discloses a cooling device for a vehicle, that includes a cooling circuit including a first circuit in which a cooling liquid circulates through a power control unit and a second circuit connected in parallel with the first circuit and in which the cooling liquid circulates through a battery without passing through the power control unit; and a flow-rate control unit that controls a proportion of a flow rate of the cooling liquid between the first circuit and the second circuit, and when the battery is being charged with the electric power of the external power supply, the control unit controls so that the flow rate of the cooling liquid flowing through the second circuit is greater than the flow rate of the cooling liquid flowing through the first circuit on a side of the power control unit.

US 2021/091432 A1 discloses a device for flow equalization of a liquid cooling system of battery energy storage that comprises a plurality of battery modules in parallel, each of the battery modules being connected to the liquid cooling system, and being provided with a cooling-fluid feeding inlet, wherein a throttle pipe is provided in the feeding inlet, the throttle pipe is provided with a flow restriction orifice, and the cooling fluids that enter the feeding inlets are adjusted by the throttle pipes to equal pressures. The device can enable the liquid cooling system to more uniformly distribute the flow rates of the cooling fluids among battery sub-packs or modules, thereby ensuring that the battery system operates at more uniform environmental temperatures, to reduce the difference in the performances of the modules, and prolong the service lives of the batteries.

US 2021/210811 A1 discloses a vehicle battery cooling device including, in a vehicle equipped with a battery for driving, a battery accommodation part, an outside air introduction passage introducing air outside the vehicle, a heat exchanger cooling air introduced into the outside air introduction passage, a first air conditioning passage, a second air conditioning passage, a first discharge passage, and a second discharge passage. The first air conditioning passage is communicated to the heat exchanger and the vehicle room to supply air cooled by the heat exchanger to the vehicle room. The second air conditioning passage is communicated to the heat exchanger and the battery accommodation part to supply air cooled by the heat exchanger to the battery accommodation part. The first discharge passage discharges air in the vehicle room to outside the vehicle. The second discharge passage discharges air in the battery accommodation part to outside the vehicle.

US2014216693 B2 discloses a thermal management system for an electric vehicle. The thermal management system includes a thermal circuit for regulating a battery temperature. A filter is located upstream of the battery for filtering liquid coolant. The thermal management system also includes a second thermal circuit in fluid communication with the battery thermal circuit. The second thermal circuit provides thermal control to a vehicle system other than the battery. The battery thermal circuit includes a plurality of battery cells. Pluralities of heat exchanger fins are located between each of the battery cells to provide the coolant to regulate the battery temperature. The filter has a filtration transfer function based on a filter characteristic of the fins.

The invention is defined in the claims.

### BRIEF DESCRIPTION OF THE DRAWINGS

Specific implementations will now be described with reference to the following drawings, which are provided by way of example, and not limitation.
Figure 1 illustrates a cooling loop in an example cooling system that is configured to dissipate heat from a high heat device and a low heat device.
Figure 2A is a graph showing a relationship between a fin spacing of the cold plate of electronic control units (ECUs) and a temperature of the ECUs.
Figure 2B is a graph showing a relationship between a cold plate flow rate and a cold plate pressure drop for different fin spacings.
Figure 3 is a schematic view of a fluid flow controller in a cooling system, according to an embodiment.
Figure 4 is a schematic view of a fluid flow controller in a cooling system, according to another embodiment.
Figure 5A is a schematic view of a fluid flow controller in a cooling system in a first state in which there is a lower fluid flow in the cooling system, according to another embodiment.
Figure 5B is a schematic view of the fluid flow controller in the cooling system in a second state in which there is a higher fluid flow in the cooling system of Figure 5A.
Figure 5C is a schematic cross-sectional side view of the fluid flow controller of Figures 5A and 5B in the first state.
Figure 6A is a schematic perspective view of a fluid flow controller in a first state, according to another embodiment.
Figure 6B is a schematic perspective view of the fluid flow controller of Figure 6A in a second state.
Figure 7 is a schematic view of a fluid flow controller in a cooling system, according to another embodiment.
Figure 8 is a schematic view of a fluid flow controller in a cooling system, according to another embodiment.
Figure 9A is a schematic cross-sectional view of a fluid flow controller in a cooling system, according to another embodiment.
Figure 9B is a schematic perspective view of the fluid flow controller of Figure 9A.
Figure 9C is a schematic perspective view of a centrifugal separator.
Figure 10A is a schematic cross-sectional view of a fluid flow controller in a cooling system, according to another embodiment.
Figure 10B is a schematic perspective view of the fluid flow controller of Figure 10A.
Figure 10C is a schematic perspective view of half of the fluid flow controller of Figures 10A and 10B.

### DETAILED DESCRIPTION OF CERTAIN EMBODIMENTS

The following detailed description of certain embodiments presents various descriptions of specific embodiments. In this description, reference is made to the drawings where like reference numerals and/or terms can indicate identical or functionally similar elements. It will be understood that elements illustrated in the figures are not necessarily drawn to scale.

In a vehicle, such as an electric vehicle, there can be one or more cooling systems. For example, the vehicle can include a battery coolant loop, a heating, ventilation, and air conditioning (HVAC) cabin and battery refrigerant loop, an inverter, charger and motor/transmission cooling loop, and a motor oil cooling loop. Within the same loop, there can be electronic components or devices with different cooling needs. For example, within the battery cooling loop, there can be a high heat device (e.g., a battery) and a low heat device (e.g., electronic control unit, such as a vehicle electronic control unit, another vehicular electronics system, etc.) that generates less heat than the high heat device. Since the low heat device generates less heat, the low heat device can be cooled with a lower flow of a coolant than the high heat device.

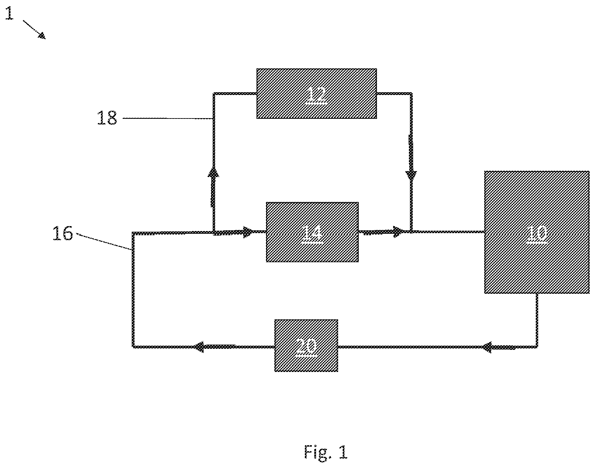

Figure 1 illustrates a cooling loop in an example cooling system 1 that is configured to dissipate heat from a high heat device (e.g., a battery 10) and a low heat device (e.g., a vehicle electronic control unit (ECU) 12). Examples of the vehicle ECU 12 can include an autopilot ECU, a driver assistance ECU, and an infotainment ECU. Although the battery 10 and the vehicle ECU 12 may be used as examples of the high heat device and the low heat device, respectively, in this disclosure, any other suitable components or devices that generate heat can be the high heat device and the low heat device regardless of their power dissipation as long as the high and low heat devices have different cooling needs. The cooling system 1 includes a restrictor 14 that restricts or controls a flow of a coolant flowing in the cooling loop. The cooling loop includes a main loop 16 for cooling the battery 10 and a secondary loop 18 for cooling the vehicle ECU 12. The coolant flowing in the main loop 16 can reduce heat of the battery 10 and the coolant flowing in the secondary loop 18 can reduce heat of the vehicle ECU 12. The cooling system 1 can include a pump 20 that drives the flow of the coolant in the cooling system 1. The cooling system 1 can also include a chiller, radiator, or any combination of cooling systems (not illustrated in Figure 1) that can reduce the temperature of the coolant. The arrows in the flow path (the main path or loop 16 and the secondary path or loop 18) indicate an example flow direction of the coolant. Although embodiments of this disclosure may refer to a main loop 16 and a secondary loop, any suitable principles and advantages disclosed herein can be applied to any suitable main path and any suitable secondary path.

The battery 10 can generate a significant amount of heat during use. In order to properly operate the battery 10 and/or other sensitive components near the battery 10 that can be affected by the heat from the battery 10, the battery 10 can be cooled to an operable temperature within an operating temperature range.

The vehicle ECU 12 can include, for example, any custom electronics, a graphics processing unit (GPU), a microcontroller unit (MCU), a heat spreader, and a cold plate (e.g., a heat sink). The cold plate can include cooling fins that are spaced apart by spacings therebetween. In order to properly operate the vehicle ECU 12 and/or other sensitive components near the vehicle ECU 12 that can be affected by the heat from the vehicle ECU 12, the vehicle ECU 12 can be cooled to an operable temperature within an operating temperature range. The coolant can pass through the channels between the cooling fins of the cold plate to cool the vehicle ECU 12.

The battery 10 typically generates more heat than the vehicle ECU 12. Therefore, as compared to the battery 10, the vehicle ECU 12 may operate within its operational temperature with less cooling than the battery 10. For example, a flow of the coolant to maintain the operable temperature of the battery 10 can be about 5 times (e.g., 3 to 7 times or 4 to 6 times) a flow of the coolant to maintain the operable temperature of the vehicle ECU 12. If the vehicle ECU 12 were positioned in the main loop 16, and overcool the vehicle ECU 12, the pressure in the main loop 16 can drop significantly, which may negatively affect the cooling function of the cooling system 1. In other words, the impedance of a cooling loop that includes serially-coupled paths for cooling the vehicle ECU 12 and the battery 10 can be significantly higher as compared to the impedance of the cooling loop that couples the main loop 16 and the secondary loop 18 in parallel. The serially coupled paths can cause a relatively high pump power consumption, noise, and/or system pressure, which can negatively affect the reliability of the cooling system. As illustrated in Figure 1, the vehicle ECU 12 can be positioned in the secondary loop 18 and a portion of the coolant flowing in the main loop 16 can be routed to the secondary loop 18 to cool the vehicle ECU 12. Such arrangement of the secondary loop 18 for the vehicle ECU 12 can reduce or minimize the pressure drop in the main loop 16. There may be other considerations for diverting a portion of the flow in the main loop 16 to the secondary loop 18. Regardless of the reason for a partial flow diversion, the proposed solutions disclosed herein can be applicable. The principles and advantages disclosed herein can be implemented in any suitable device or system to divert a flow path into a plurality of flow paths.

In order to route the portion of the coolant flowing in the main loop 16 to the secondary loop 18, the restrictor 14 can be used. The restrictor 14 may be an active valve in certain applications. However, using such an active component or device can be complicated and/or costly. Therefore, a simpler, lower cost restrictive component or device is advantageous in certain applications.

Various embodiments disclosed herein relate to passive flow control devices that can be used as a restrictor in a cooling system, such as the restrictor 14 in the cooling system 1. The passive flow control devices disclosed herein can be arranged such that they function without regular maintenance or service. Passive flow control devices disclosed herein can enable integration of relatively high-performance cooling solutions for vehicle electronics, which can have high surface area cooling fins (smaller gap between fins). This can improve system performance. The self-regulating flow control embodiments disclosed herein can enable more energy-efficient operation of a battery cooling loop in an electric vehicle. At the same time, there can be lower noise, vibration and harshness (NVH) for the electric vehicle. These improvements can benefit one or more of reliability, mileage, or quality of customer experience.

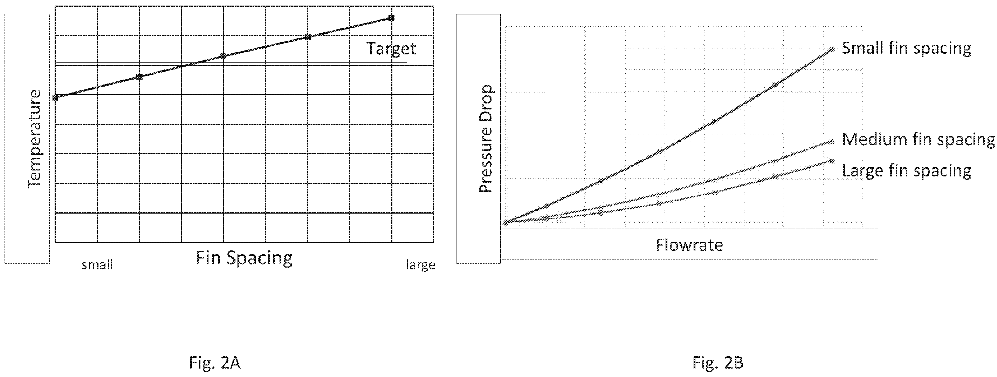

Figure 2A is a graph showing a relationship between a fin spacing of the cold plate of an ECU (e.g., the vehicle ECU 12) and a temperature of the vehicle ECU 12. The graph of Figure 2A indicates that a finer spacing can provide a better cooling function than the larger spacing.

Figure 2B is a graph showing a relationship between a cold plate flow rate and a cold plate pressure drop. The graph of Figure 2B indicates that a higher flow in the secondary loop 18 results in a greater pressure drop. The graph of Figure 2B also indicates that when the fin spacing is smaller there is a higher pressure drop. Accordingly, when more coolant is routed to the secondary loop 18, there can be a greater overall pressure drop in the cooling system 1. In some applications, reducing or minimizing the pressure drop in the cooling system 1 while providing sufficient cooling function for the vehicle ECU 12 can be significant to avoid or mitigate excessive power consumption by a pump that drives the flow of the coolant in the cooling system 1. Being able to tune the fin spacing(s) of the cold plate to the design specification of any specific ECU is significant to optimize the cooling system 1 for improved performance.

The vehicle ECU 12 can be sensitive to relatively small particles within a coolant due to a relatively small spacing between the fins of a cold plate of the vehicle ECU 12. For example, a particle may clog the spacing between fins, thereby disrupting the flow of the coolant when the particle size is greater than the size of the spacing. On the other hand, the battery 10 can be less sensitive to particles in the coolant. Various embodiments disclosed herein relate to flow control devices that can prevent or impede particles of a certain size from entering the secondary loop 18. In some embodiments, the flow control devices can filter the particles to prevent or impede the particles from entering the secondary loop 18.

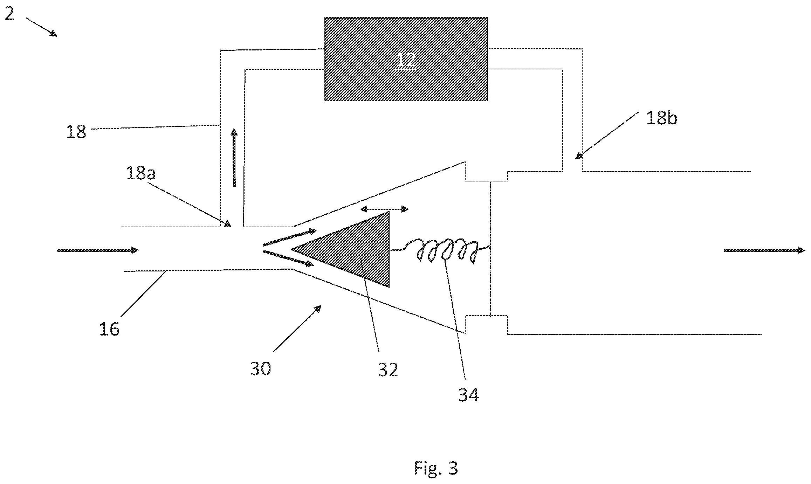

Figure 3 is a schematic view of a fluid flow controller 30 in a cooling system 2, according to an embodiment. The cooling system 2 of Figure 3 can have a generally similar overall structure as the cooling system 1 of Figure 1. The fluid flow controller 30 is an example of the restrictor 14 shown in Figure 1. The cooling system 2 can include a flow path that has a main loop 16 and a secondary loop 18. The fluid flow controller 30 can be positioned in the main loop 16 of the flow path. The fluid controller 30 can be disposed in the main loop 16 of the cooling system 2 between an inlet 18a and an outlet 18b of the secondary loop 18. The inlet 18a is in fluid communication with a first portion of the main loop 16 and the outlet 18b is in fluid communication with a second portion of the main loop 16. The main loop 16 can be for cooling a higher heat device or a first heat source, and the secondary loop 18 can be for cooling a lower heat device or second heat source that generates less heat than the first heat source. The cooling system 2 can dissipate heat generated from a plurality of heat generating sources (e.g., electronic devices) that are coupled (e.g., connected in a thermally communicative manner) to the flow path. Heat generating sources can be referred to as heat sources. The electronic devices can include a high heat device (see Figure 1) that can generate more heat than a low heat device (e.g., a vehicle ECU 12) such that more cooling is desired for the high heat device than the low heat device. The high heat device can be referred to as a higher heat device. The low heat device can be referred to as a lower heat device.

The flow path is configured such that more coolant flows in the main loop 16 than the secondary loop 18. In some embodiments, the fluid flow controller 30 can control the flow of the secondary loop 18 based at least in part on heat generated by of the heat generating sources. For example, the fluid flow controller 30 can route between 10% to 20%, 10% to 15%, or 15% to 20% of the fluid flow in the main loop 16 to the secondary loop 18.

The fluid flow controller 30 can be a passive flow restrictor or a passive flow rate controller. The fluid flow controller 30 is a passive device that can dynamically adjust the fluid flow in the flow path. The fluid flow controller 30 can include a plug 32 coupled to a portion of the cooling system 2 by a spring 34. The plug 32 and the spring 34 can provide resistance to the flow of the coolant in the main loop 16. The flow of the coolant in the main loop 16 can displace the plug 32 in a direction of the flow of the coolant. A displacement amount of the plug 32 can differ based at least in part on the flow rate of the coolant in the main loop 16 and/or a spring force or tensile strength of the spring 34. The resistance in the flow can cause at least a portion of the coolant in the main loop 16 to flow into the secondary loop 18. The spring force or tensile strength of the spring 34 can be selected to deliver a desired amount and/or ratio of the coolant to flow to the vehicle ECU 12 through the secondary loop 18. As an amount and/or rate of the flow of the coolant in the main loop 16 increases, a fluid force can overcome the spring force thereby pushing the plug 32 to the right in Figure 3, causing a larger displacement and therefore less restrictive fluid path between the plug 32 and an inner wall of the main loop 16 for the coolant to flow. Such a self-regulating or passive feature can be beneficial in certain system design configurations. A combination of plug shape and spring strength can be used to regulate the flow in the secondary loop 18 at different values of flow in the main loop 16.

Although the plug 32 has a generally triangular or conical shape in the illustrated embodiment, the plug 32 can have any other suitable shape. For example, a more flow-resistive shape may be used to increase the amount of the coolant to be delivered to the vehicle ECU 12. In some embodiments, a surface of the plug 32 can be smoothed to increase the amount of the coolant to be delivered to the main loop 16.

The plug 32 with a certain characteristic and/or the spring 34 with a particular spring force can be selected to control the amount of the coolant routed to the secondary loop 18. For example, the plug 32 and the spring 34 can be configured to route 10% to 20% of the coolant flowing in the main loop 16 to the secondary loop 18.

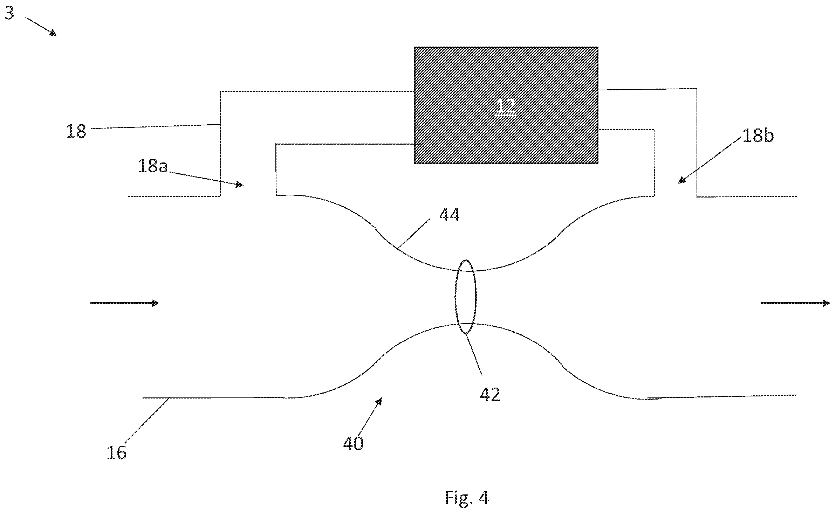

Figure 4 is a schematic view of a fluid flow controller 40 in a cooling system 3, according to an embodiment. The cooling system 3 of Figure 4 can have a generally similar overall structure as the cooling system 1 of Figure 1. The fluid flow controller 40 is an example of the restrictor 14 shown in Figure 1. The fluid controller 40 can be disposed in the main loop 16 of the cooling system 3 between an inlet 18a and an outlet 18b of the secondary loop 18.

The fluid flow controller 40 can be a passive flow restrictor or a passive flow rate controller. The fluid flow controller 40 is a passive device that can dynamically adjust the fluid flow in the flow path. The fluid flow controller 40 can include an elastic band 42, such as a rubber band, that wraps around an elastic, expandable, or flexible tube 44, such as a rubber tube, that at least partially defines a portion of the main loop 16. The elastic band 42 can provide resistance to the flow of the coolant in the main loop 16. The flow of the coolant in the main loop 16 can push against an inner wall of the flexible tube 44 thereby deforming the flexible tube 44 making a diameter of the flow path defined by the flexible tube 44 greater. A deformation amount of the flexible tube 44 can differ based at least in part on the flow rate of the coolant in the main loop 16 and/or the elasticity of the elastic band. The resistance in the flow can cause at least a portion of the coolant in the main loop 16 to flow into the secondary loop 18. An elasticity of the elastic band 42 can be selected to deliver a desired amount and/or ratio of the coolant to flow to the vehicle ECU 12 through the secondary loop 18.

A size of and material property of the elastic band 42 and/or the flexible tube 44 can be selected to control the amount of the coolant routed to the secondary loop 18. For example, the fluid controller 40 can route an amount in a range from 10% to 20% of the coolant flowing in the main loop 16 to the secondary loop 18.

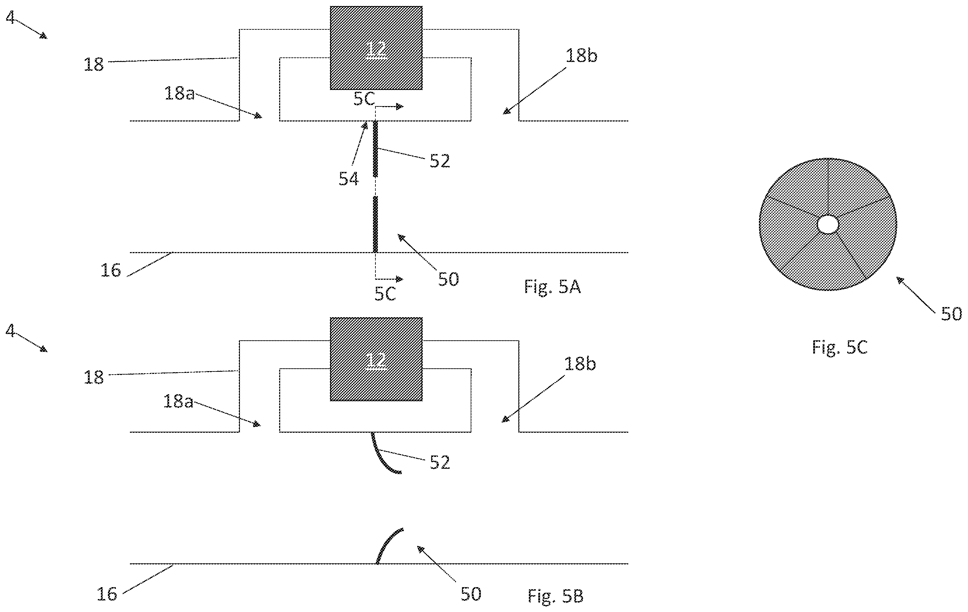

Figure 5A is a schematic view of a fluid flow controller 50 in a cooling system 4 in a first state in which there is no or a lower fluid flow in the cooling system 3, according to an embodiment. Figure 5B is a schematic view of the fluid flow controller 50 in the cooling system 4 in a second state in which there is a higher fluid flow in the cooling system 4. Figure 5C is a schematic cross-sectional side view of the fluid flow controller 50 in the first state. The cooling system 4 of Figures 5A-5B can have a generally similar overall structure as the cooling system 1 of Figure 1. The fluid flow controller 50 is an example of the restrictor 14 shown in Figure 1. The fluid controller 50 can be disposed in the main loop 16 of the cooling system 4 between an inlet 18a and an outlet 18b of the secondary loop 18.

The fluid flow controller 50 can be a passive flow restrictor or a passive flow rate controller. The fluid flow controller 50 is a passive device that can dynamically adjust the fluid flow in the flow path. The fluid flow controller 50 can include flaps 52, such as rubber flaps, that are coupled to an inner wall 54 of a portion of the main loop 16. The flaps 52 can provide resistance to the flow of the coolant in the main loop 16. The flow of the coolant in the main loop 16 can push against flaps 52 thereby displacing the flaps 52 to allow the coolant to pass through the fluid flow controller 50. A displacement amount of the flaps 52 can differ based at least in part on the flow rate of the coolant in the main loop 16. The resistance in the flow can cause at least a portion of the coolant in the main loop 16 to flow into the secondary loop 18. A material and/or a shape of the flaps 52 can be selected to deliver a desired amount and/or rate of the coolant to flow to the vehicle ECU 12 through the secondary loop 18.

A material and/or a shape of the flaps 52 can be selected to control the amount of the coolant routed to the secondary loop 18. For example, the fluid controller 50 can route an amount in a range from 10% to 20% of the coolant flowing in the main loop 16 to the secondary loop 18.

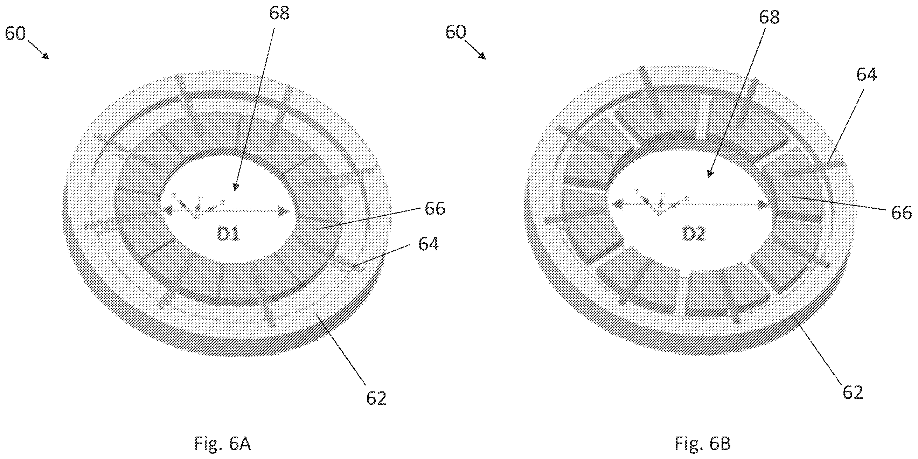

Figure 6A is a schematic perspective view of a fluid flow controller 60 in a first state (a first temperature), according to an embodiment. Figure 6B is a schematic perspective view of the fluid flow controller 60 in a second state (a second temperature). The fluid flow controller 60 is an example of the restrictor 14 shown in Figure 1. The fluid flow controller 60 can be implemented in a cooling system in a similar manner as the fluid flow controller 50 shown in Figures 5A-5C. The fluid controller 60 can be disposed in the main loop 16 of a cooling system between an inlet and an outlet of the secondary loop 18 similar to the example fluid flow controllers of Figures 3-5C.

The fluid flow controller 60 can be a passive flow restrictor or a passive flow rate controller. The fluid flow controller 60 is a passive device that can dynamically adjust the fluid flow in the flow path. The fluid flow controller 60 utilized temperature dependent behavior of shape memory alloys to adjust the opening of the restrictor to change fluid flow. The fluid flow controller 60 can include a base plate 62, shape memory springs 64, and movable plates 66 that are coupled to the base plate 62 by way of the shape memory springs 64 and movable during operation of the cooling system 60. The shape memory springs 64 can extend and compress in response to a temperature change. When the coolant flows in a flow path 68, the temperature of the coolant can cause the temperature of the shape memory springs 64 to change. In the first state (see Figure 6A), the shape memory springs 64 extend and the movable plates 66 are positioned in first locations. In the second state (see Figure 6B), the shape memory springs 64 compress and the movable plates 66 are positioned in second locations. The shape memory springs 64 can extend and compress as the temperature of the coolant (which in turn changes the temperature of the shape memory spring 64) changes. Therefore, there can be intermediate states between the first state that has a first temperature and the second state that has a second temperature.

In the first state, a diameter of the flow path 68 is at minimum, and in the second state, the diameter of the flow path 68 is at maximum. Therefore, more coolant flows in the main loop 16 in the first sate and less coolant flows in the main loop 16 in the second state when the fluid flow controller is positioned similar to the fluid flow controllers of Figures 3-5C.

Each of the shape memory springs 64 in the fluid flow controller 60 can be the same or different from each other. For example, springs with different properties (e.g., different extension/compression rates) can be used to further control the flow rate of the coolant in the cooling system. A property characteristics of the shape memory springs 64 and/or a shape and size of the movable plates 66 can be selected to control the amount and/or rate of the coolant routed to the secondary loop 18. For example, the fluid controller 60 can route an amount in a range from 10% to 20% of the coolant flowing in the main loop 16 to the secondary loop 18.

The fluid flow controllers 30, 40, 50, 60 illustrated in Figures 3-6B utilize mechanical properties of parts (e.g., the plug 32 and the spring 34 of the fluid flow controller 30; the elastic band 42 and the flexible tube 44 of the fluid flow controller 40; and the flaps 52 of the fluid flow controller 50; the shape memory spring 64 of the fluid flow controller 60) to control the flow of the coolant in the main loop 16 and the secondary loop 18. Accordingly, the fluid flow controllers 30, 40, 50, 60 are passive controllers. As discussed above, compared to an active flow restrictor, the passive fluid flow controllers disclosed herein can enable a cooling system that is simpler, more cost efficient, and/or less energy consuming.

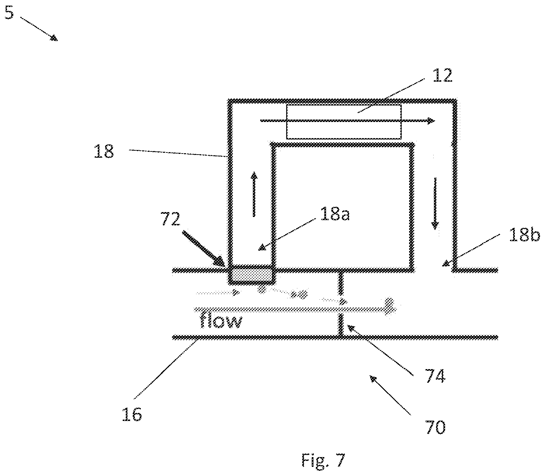

Fluid flow controller disclosed herein can control flow of a coolant to be driven to different portions (e.g., a main loop and a secondary loop) of a flow path within a cooling system. Figures 3 to 6B relate to fluid flow controllers that can control an amount of the coolant to be driven to the different portions of the flow path. Figures 7 to 10C relate to fluid flow controllers that can control the flow of certain particles in the coolant in the main loop 16 and the secondary loop 18. Any suitable principles and advantages of these embodiments related to controlling flow of coolant and/or controlling flow of particles can be implemented together with each other. The technical solutions of Figures 7 to 10C can prevent or impede particles having a size greater than a channel in a cooling solution of heat generating source (e.g., a vehicle ECU) that is cooled by the secondary loop of a cooling system from entering the secondary loop 18.

Figure 7 is a schematic view of a fluid flow controller 70 in a cooling system 5, according to an embodiment. The cooling system 5 of Figure 7 can have a generally similar overall structure as the cooling system 1 of Figure 1. The cooling system 5 can include a flow path that has a main loop 16 and a secondary loop 18. The fluid flow controller 70 can include a filter 72. In some embodiments, the filter 72 can be positioned at an inlet 18a of the secondary loop 18. The cooling system 5 can dissipate heat generated from a plurality of heat generating sources (e.g., one or more electronic devices, one or more batteries, etc.) that are coupled (e.g., connected in a thermally communicative manner) to the flow path. The heat generating sources can include a high heat device (see battery 10 of Figure 1) that can generate more heat than a low heat device (e.g., a vehicle ECU 12) such that more cooling is desired for the high heat device than the low heat device. In some implementations, for example as described above, the vehicle ECU 12 may be sensitive to relatively small particles in the coolant. For example, the vehicle ECU 12 can be sensitive to smaller particles than the high heat device (e.g., a battery). In some embodiments, the filter 72 of the fluid flow controller 70 can filter particles in the coolant at the inlet 18a of the secondary loop 18. This can prevent or reduce the number of the particles in the coolant of a size greater than a threshold size from entering the secondary loop 18. The fluid flow controller 70 can include a flow rate controller 74. In some embodiments, the flow rate controller 74 can be implemented in accordance with any suitable principles and advantages of one or more of the fluid flow controllers 30, 40, 50, 60.

The filter 72 can filter particles greater than a threshold size to prevent or reduce the number of such particles from entering the secondary loop 18. Such filtering can reduce or eliminate the impact of relatively small filters on a cooling solution of the low heat device. For example, the filtering can reduce or eliminate clogging of relatively small channels between fins of a cold plate of an electronic system, such as the vehicle ECU12. In the main loop 16, the coolant can flow at a greater rate than a flow rate of the coolant in the secondary loop 18. When a particle greater than the threshold size is included in the coolant that flows toward the secondary loop 18, the particle can be filtered by the filter 72. Accordingly, the filter 73 can prevent the particle from entering the secondary loop 18. The filtered particle can be blown off by the flow of the coolant in the main loop 16 from the filter 72 and travel in the main loop 16. Therefore, replacement and/or cleaning of the filter 72 due to the particles being in the filter 72 may not be needed. The filter 72 can be positioned and shaped in any suitable manner so as to properly filter particles over a threshold size from entering the secondary loop 18 and be removed from the filter by the flow of the coolant in the main loop 16. Such particles flow through the main loop 16.

The size of the particles to be filtered can be determined based at least in part on the specifications of the low heat device (e.g., an vehicle ECU 12). For example, the filter 72 can be configured to filter particles having a diameter greater than 500 µm, 300 µm, 100 µm, or 50 µm.

The flow rate controller 74 can control the relative flow rates of the coolant in the main loop 16 and the secondary loop 18. The flow rate of the coolant in the main loop 16 is typically higher than the flow rate of the coolant in the secondary loop 18. For example, the flow rate of the coolant in the main loop 16 can be sufficiently higher than the flow rate of the coolant in the secondary loop 18 to enable the particle filtered by the filter 72 to be removed from a surface of the filter 72 by the flow rate of the coolant in the main loop 16.

The cooling system 5 can be designed such that the flow parallel to a surface of the filter 72 blows or clears particles from the surface that can block or clog the filter 72, therefore eliminates or minimize the need for any service or cleaning of the filter 72.

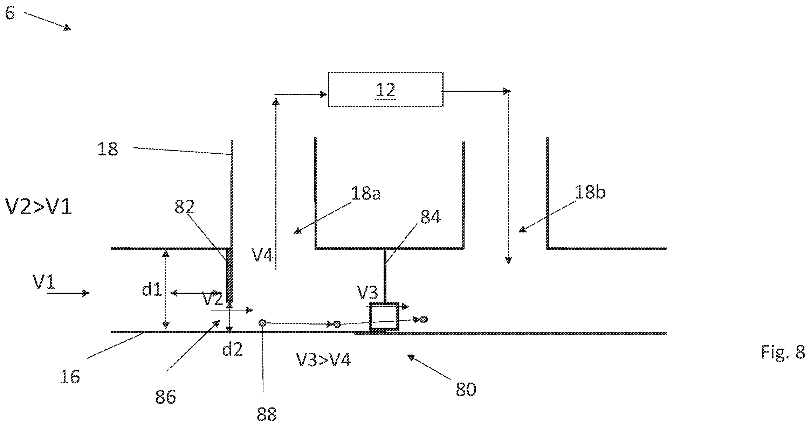

Figure 8 is a schematic view of a fluid flow controller 80 in a cooling system 6, according to an embodiment. The cooling system 6 of Figure 8 can have a generally similar overall structure as the cooling system 1 of Figure 1. The cooling system 6 can include a flow path that has a main loop 16 and a secondary loop 18. The fluid flow controller 80 comprises a velocity adjustment structure that includes a first flow rate controller 82 and a second flow rate controller 84. In some embodiments, the first flow rate controller 82 can be positioned in the main loop 16 at a location upstream of an inlet 18a of the secondary loop 18, and the second flow rate controller 84 can be positioned in the main loop 16 at a location between the inlet 18a and an outlet 18b of the secondary loop 18. In some implementations, for example as described above, a vehicle ECU 12 may be sensitive to particles in the coolant. For example, the vehicle ECU 12 can be more sensitive to particles than the high heat device (e.g., a battery). In some embodiments, the fluid flow controller 80 can prevent or reduce the number of particles of at least a threshold size from entering the secondary loop 18. The fluid flow controller 80 can prevent or reduce the number of particles of a certain size from entering the secondary loop 18 without blocking the inlet 18a to the secondary loop 18. In some embodiments, the first and second flow rate controllers 82, 84 can be implemented in accordance with any suitable principles and advantages of one or more of the fluid flow controllers 30, 40, 50, 60.

The particles in coolant flowing in the main loop 16 downstream of the first flow rate controller 82 have a first velocity V1. The particles in coolant flowing in the main loop 16 at the first flow rate controller 82 have a second velocity V2. The particles in coolant flowing in the main loop 16 at the second flow rate controller 84 have a third velocity V3. The coolant flowing at the inlet 18a of the secondary loop 18 has a fourth velocity V4. The first flow rate controller 82 can increase the velocity the particles in the main loop 16 such that the second velocity V2 is greater than the first velocity V1.

In some embodiments, the first flow rate controller 82 can comprise an opening that narrows the flow path of the coolant. For example, as illustrated in Figure 8, an opening 86 that narrows the flow path of the coolant can be positioned at an lower side (e.g., a side opposite the inlet 18a of the secondary loop 18) of the flow path. The main loop 16 has a diameter d1, and the opening 86 has a diameter d2. The diameter d1 of the main loop 16 can be greater than the diameter d2 of the opening 86 of the orifice. The position of the opening 86, its diameter, and/or the higher fluid velocity V2 through opening 86 can enable a particle 88 in the coolant to continue flow in the main loop 16 without entering the secondary loop 18 because of its inertial forces.

In some embodiments, the second flow rate controller 84 can comprise a flow rate controller that is the same or generally similar to the first flow rate controller 82. In some embodiments, the second flow rate controller 84 can comprise one or more fluid flow controllers 30, 40, 50, 60 of Figures 3-6B.

The dimensions and locations of the first flow rate controller 82 can be selected based at least in part on one or more of a flow rate of the coolant, physical properties of the coolant, and size and/or density of the particle 88 to prevent or impede the particle 88 from entering the secondary loop 18. Such parameters can be adjusted to prevent or mitigate particles larger than a certain size from entering the secondary loop 18. Stokes number is a widely used non-dimensional number to describe the behavior of particles in fluid flow, where larger values indicate that particles are more likely to detach from fluid streamline due to their inertia.

As the diameter d2 of the opening 86 is reduced, Stokes number can increase and the pressure drop can increase. Accordingly, the diameter d2 of the opening 86 can be tuned to a desired Stokes number and/or acceptable pressure drop. Coolant temperature and/or particle size can impact the change in velocity of the particle 88 due to the opening 86. Fin spacing or channel size in a cooling solution of the vehicle ECU 12 can be determined based at least in part on the diameter of a particle that can flow to the secondary loop 18 with the opening 86 under operating conditions of the coolant.

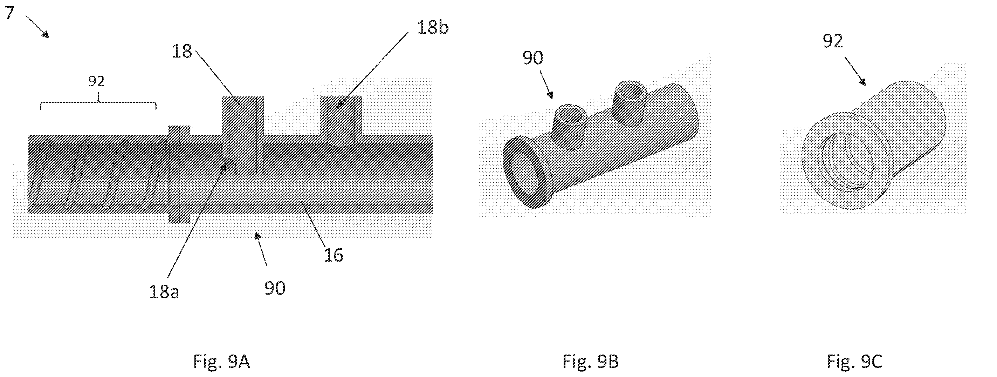

Figure 9A is a schematic cross-sectional view of a fluid flow controller 90 in a cooling system 7, according to an embodiment. The cooling system 7 of Figure 9A can have a generally similar overall structure as the cooling system 1 of Figure 1. Figure 9B is a schematic perspective view of the fluid flow controller 90 of Figure 9A. The cooling system 7 can include a flow path that has a main loop 16 and a secondary loop 18. The fluid flow controller 90 can include a turbulence generator, such as a centrifugal separator 92. Figure 9C is a schematic perspective view of the centrifugal separator 92. In some embodiments, the centrifugal separator 92 can be positioned in the main loop 16 at a location upstream of an inlet 18a of the secondary loop 18. In some implementations, for example, as described above, certain devices or components may be sensitive to particles in the coolant. For example, the low heat device (e.g., a vehicle ECU) that is positioned in the secondary loop 18 can be more sensitive to particles than the high heat device (e.g., a battery) that is positioned in the main loop 16. In some embodiments, the fluid flow controller 90 can prevent or reduce a number of particles of a certain size from entering the secondary loop 18. In some embodiments, the centrifugal separator 92 can be welded to a portion of the main loop 16.

The centrifugal separator 92 can comprise a spiral structure that causes a helical flow in the coolant flowing in the main loop 16 so as to push a particle in the coolant to an inner wall of the main loop 16. In some embodiments, the coolant flowing at or near the center of the main loop 16 can have no particles. In some other embodiments, the coolant flowing at or near the center of the main loop 16 can have a relatively low amount of particles. In some other embodiments, the coolant flowing at or near the center of the main loop 16 can have particles with sizes smaller than a particular size. The inlet 18a of the secondary loop 18 can be positioned at or near a center of the main loop 16. The coolant flowing at or near the center of the main loop 16 can enter the secondary loop 18. The centrifugal separator 92 and the position of the inlet 18a can prevent or reduce a number of particles of a certain size from entering the secondary loop 18. The diameter of the opening 18a can be determined based at least in part on the desired flow rate in the secondary loop 18 and the maximum size of the particles allowed in the secondary loop 18.

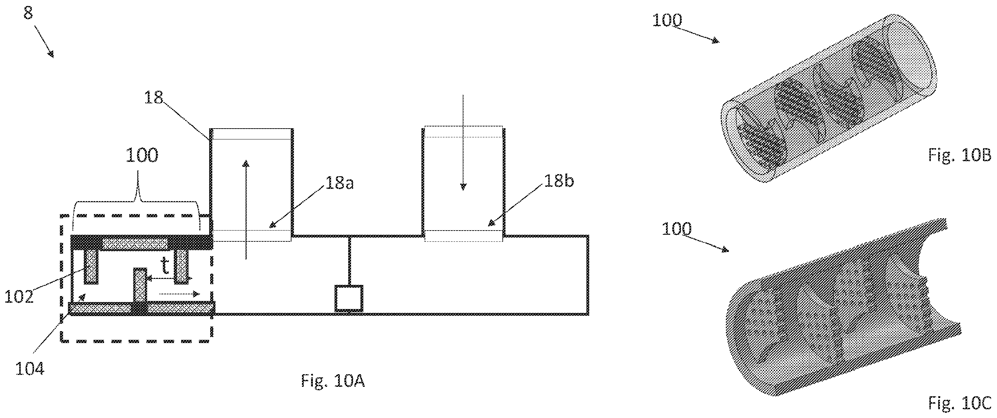

Figure 10A is a schematic cross-sectional view of a fluid flow controller 100 in a cooling system 8, according to an embodiment. The cooling system 8 of Figure 10A can have a generally similar overall structure as the cooling system 1 of Figure 1. Figure 10B is a schematic perspective view of the fluid flow controller 100 of Figure 10A. Figure 10C is a schematic perspective view of half of the fluid flow controller 100 of Figures 10A and 10B. The cooling system 8 can include a flow path that has a main loop 16 and a secondary loop 18. The fluid flow controller 100 can include a porous plates 102. In some embodiments, the porous plates 102 can be positioned in the main loop 16 at a location upstream of an inlet 18a of the secondary loop 18. In some implementations, for example, as described above, certain devices or components may be sensitive to particles in the coolant. For example, the low heat device (e.g., a vehicle ECU) that is positioned in the secondary loop 18 can be more sensitive to particles than the high heat device (e.g., a battery) that is positioned in the main loop 16. In some embodiments, the fluid flow controller 100 can prevent or reduce a number of particles of a certain size from entering the secondary loop 18.

Each of the porous plates 102 can include a plurality of pores that can filter particles with sizes greater than a particular size. In some embodiments, the porous plates 102 can have different pore sizes. For example, the porous plate 102 positioned downstream can have a larger pore size that is configured to filter larger particles and the porous plate 102 positioned upstream can have a smaller pore size that is configured to filter smaller particles. The porous plates 102 can include an opening 104. In some embodiments, the opening 104 of the porous plates 102 can function in the same or generally similar manner as opening 86 of the first flow rate controller 82 shown in Figure 8. When the pores of the porous plate 102 clog, the porous plate 102 can function as a baffle to divert flow away from the inlet 18a of the secondary loop 18.

The fluid flow controllers 70, 80, 90, 100 illustrated in Figures 7-10C utilize fluid dynamics to control the flow of particles in the coolant in the main loop 16 and the secondary loop 18. Therefore, the fluid flow controllers 70, 80, 90, 100 are passive fluid flow controllers. Compared to an active flow restrictor, the passive fluid flow controllers disclosed herein can enable a cooling system that is simpler, more cost efficient, and/or less energy consuming.

## Claims

1. A cooling system comprising:
a flow path including a main path (16) for cooling a first heat source (10) and a secondary path (18) for cooling a second heat source (12), the secondary path (18) having an inlet and an outlet, the inlet in fluid communication with a first portion of the main path (16) and the outlet in fluid communication with a second portion of the main path (16); and
a fluid flow controller (14) positioned in the main path (16) between the first portion and the second portion, parallel to the second heat source, the fluid flow controller (14) configured to adjust an amount of a coolant in the flow path that is routed to the secondary path (18) from the main path (16) through the inlet of the secondary path (18);
wherein a first amount of the coolant routed to the second heat source (12) and a second amount of the coolant routed to the fluid flow controller (14) are combined at the second portion and are then routed to the first heat source (10) to cool the first heat source, and
wherein the main path (16) is configured to provide more cooling to the first heat source (10) than the secondary path (18) is configured to provide to the second heat source (12).

2. The cooling system of claim 1, wherein the fluid flow controller is a passive fluid flow controller and preferably comprises a plug and a spring.

3. The cooling system of claim 1, wherein the fluid flow controller is a passive fluid flow controller, and wherein the passive fluid flow controller comprises an elastic band and a flexible tube.

4. The cooling system of claim 1, wherein the fluid flow controller is a passive fluid flow controller, and wherein the passive fluid flow controller comprises one or more flaps coupled to an inner wall of the main path (16).

5. The cooling system of claim 1, wherein the fluid flow controller is a passive fluid flow controller, and wherein the passive fluid flow controller comprises a structure that expands and/or compresses in response to a change in temperature to adjust an opening in the main path (16).

6. An electric vehicle comprising the cooling system of claim 1, the first heat source (10) cooled by the main path (16), and the second heat source (12) cooled by the secondary path, wherein the first heat source (10) is a higher heat device and the second heat source (12) is a lower heat device; and preferably wherein the first heat source (10) comprises a battery, and the second heat source (12) comprises a vehicular electronics system.

7. The cooling system of one of the preceding claims, wherein:
the second heat source (12) includes a channel that defines at least a portion of the secondary path; and
the cooling system further comprises a secondary fluid flow controller is configured to impede a particle from entering the secondary path via the inlet of the secondary path, the particle having a size greater than a size of the channel of the second heat source (12).

8. The cooling system of claim 7, wherein the secondary fluid flow controller comprises a filter configured to filter the particle.

9. The cooling system of claim 7, wherein the secondary fluid flow controller is positioned in the main path (16) upstream of the inlet of the secondary path, preferably wherein the secondary fluid flow controller is configured to filter the particle.

10. The cooling system of claim 7, wherein the secondary fluid flow controller is positioned in the main path (16) upstream of the inlet of the secondary path, and wherein the secondary fluid flow controller is configured to increase velocity of the particle.

11. The cooling system of claim 7, wherein the secondary fluid flow controller is configured such that the particle flows through the main path (16) past the inlet of the secondary path.

12. The cooling system of claim 7, wherein the second heat source (12) comprises an electronic system that includes the channel.

13. The cooling system of claim 1, further comprising:
a secondary fluid flow controller including a passive fluid flow controller configured to impede a particle in a coolant from entering the secondary path via the inlet of the secondary path such that the particle flows through the main path (16) past the outlet of the secondary path, the particle having a size greater than a threshold size.

14. The cooling system of claim 13, wherein the passive fluid flow controller comprises a filter positioned over the inlet of the secondary path.

15. The cooling system of claim 13, wherein the passive fluid flow controller comprises a structure in the main path (16) upstream of the inlet of the secondary path, the structure configured to increase a velocity of the particle.

## Patentansprüche

1. Kühlsystem, aufweisend:
einen Durchflusspfad, der einen Hauptpfad (16) zum Kühlen einer ersten Wärmequelle (10) und einen sekundären Pfad (18) zum Kühlen einer zweiten Wärmequelle (12) umfasst, wobei der sekundäre Pfad (18) einen Einlass und einen Auslass aufweist, wobei der Einlass in Fluidverbindung mit einem ersten Abschnitt des Hauptpfads (16) steht und der Auslass in Fluidverbindung mit einem zweiten Abschnitt des Hauptpfads (16) steht; und
einen Fluiddurchflussregler (14), der im Hauptpfad (16) zwischen dem ersten Abschnitt und dem zweiten Abschnitt parallel zur zweiten Wärmequelle positioniert ist, wobei der Fluiddurchflussregler (14) dazu eingerichtet ist, eine Menge eines Kühlmittels im Durchflusspfad anzupassen, die vom Hauptpfad (16) durch den Einlass des sekundären Pfads (18) zum sekundären Pfad (18) geleitet wird;
wobei eine erste Menge des zur zweiten Wärmequelle (12) geleiteten Kühlmittels und eine zweite Menge des zum Fluiddurchflussregler (14) geleiteten Kühlmittels am zweiten Abschnitt zusammengeführt und dann zur ersten Wärmequelle (10) geleitet werden, um die erste Wärmequelle zu kühlen, und
wobei der Hauptpfad (16) dazu eingerichtet ist, mehr Kühlung für die erste Wärmequelle (10) als für den sekundären Pfad (18) bereitzustellen, der dazu eingerichtet ist, die zweite Wärmequelle (12) zu versorgen.

2. Kühlsystem nach Anspruch 1, wobei der Fluiddurchflussregler ein passiver Fluiddurchflussregler ist und vorzugsweise einen Kolben und eine Feder aufweist.

3. Kühlsystem nach Anspruch 1, wobei der Fluiddurchflussregler ein passiver Fluiddurchflussregler ist, und wobei der passive Fluiddurchflussregler ein elastisches Band und einen flexiblen Schlauch aufweist.

4. Kühlsystem nach Anspruch 1, wobei der Fluiddurchflussregler ein passiver Fluiddurchflussregler ist, und wobei der passive Fluiddurchflussregler eine oder mehrere Klappen aufweist, die mit einer Innenwand des Hauptpfads (16) verbunden sind.

5. Kühlsystem nach Anspruch 1, wobei der Fluiddurchflussregler ein passiver Fluiddurchflussregler ist, und wobei der passive Fluiddurchflussregler eine Struktur aufweist, die sich als Reaktion auf eine Temperaturänderung ausdehnt und/oder komprimiert, um eine Öffnung im Hauptpfad (16) anzupassen.

6. Elektrofahrzeug, das das Kühlsystem nach Anspruch 1 aufweist, wobei die erste Wärmequelle (10) durch den Hauptpfad (16) gekühlt wird und die zweite Wärmequelle (12) durch den sekundären Pfad gekühlt wird, wobei die erste Wärmequelle (10) eine Vorrichtung mit höherer Wärmeleistung ist und die zweite Wärmequelle (12) eine Vorrichtung mit niedrigerer Wärmeleistung ist; und wobei die erste Wärmequelle (10) vorzugsweise eine Batterie aufweist und die zweite Wärmequelle (12) ein Fahrzeugelektroniksystem aufweist.

7. Kühlsystem nach einem der vorhergehenden Ansprüche, wobei:
die zweite Wärmequelle (12) einen Kanal aufweist, der mindestens einen Abschnitt des sekundären Pfads definiert; und
das Kühlsystem ferner einen sekundären Fluiddurchflussregler aufweist, der dazu eingerichtet ist, ein Partikel daran zu hindern, über den Einlass des sekundären Pfads in den sekundären Pfad einzutreten, wobei das Partikel eine Größe aufweist, die größer ist als eine Größe des Kanals der zweiten Wärmequelle (12).

8. Kühlsystem nach Anspruch 7, wobei der sekundäre Fluiddurchflussregler einen Filter aufweist, der dazu eingerichtet ist, das Partikel herauszufiltern.

9. Kühlsystem nach Anspruch 7, wobei der sekundäre Fluiddurchflussregler im Hauptpfad (16) stromaufwärts des Einlasses des sekundären Pfads positioniert ist, wobei der sekundäre Fluiddurchflussregler vorzugsweise dazu eingerichtet ist, das Partikel herauszufiltern.

10. Kühlsystem nach Anspruch 7, wobei der sekundäre Fluiddurchflussregler im Hauptpfad (16) stromaufwärts des Einlasses des sekundären Pfads positioniert ist, und wobei der sekundäre Fluiddurchflussregler dazu eingerichtet ist, die Geschwindigkeit des Partikels zu erhöhen.

11. Kühlsystem nach Anspruch 7, wobei der sekundäre Fluiddurchflussregler derart eingerichtet ist, dass das Partikel durch den Hauptpfad (16) an dem Einlass des sekundären Pfads vorbei fließt.

12. Kühlsystem nach Anspruch 7, wobei die zweite Wärmequelle (12) ein Elektroniksystem aufweist, das den Kanal aufweist.

13. Kühlsystem nach Anspruch 1, ferner aufweisend:
einen sekundären Fluiddurchflussregler, der einen passiven Fluiddurchflussregler aufweist, der dazu eingerichtet ist, ein Partikel in einem Kühlmittel daran zu hindern, über den Einlass des sekundären Pfads in den sekundären Pfad einzutreten, so dass das Partikel durch den Hauptpfad (16) an dem Auslass des sekundären Pfads vorbei fließt, wobei das Partikel eine Größe aufweist, die größer ist als eine Schwellenwertgröße.

14. Kühlsystem nach Anspruch 13, wobei der passive Fluiddurchflussregler einen Filter aufweist, der über dem Einlass des sekundären Pfads positioniert ist.

15. Kühlsystem nach Anspruch 13, wobei der passive Fluiddurchflussregler eine Struktur im Hauptpfad (16) stromaufwärts des Einlasses des sekundären Pfads aufweist, wobei die Struktur dazu eingerichtet ist, eine Geschwindigkeit des Partikels zu erhöhen.

## Revendications

1. Un système de refroidissement comprenant :
un trajet d'écoulement comprenant un trajet principal (16) pour refroidir une première source de chaleur (10) et un trajet secondaire (18) pour refroidir une seconde source de chaleur (12), le trajet secondaire (18) ayant une entrée et une sortie, l'entrée étant en communication de fluide avec une première partie du trajet principal (16) et la sortie étant en communication de fluide avec une seconde partie du trajet principal (16) ; et
un dispositif de régulation de flux de fluide (14) positionné dans le trajet principal (16) entre la première partie et la seconde partie, en parallèle avec la seconde source de chaleur, le dispositif de régulation de flux de fluide (14) étant configuré pour ajuster une quantité de fluide caloporteur dans le trajet d'écoulement qui est acheminée vers le trajet secondaire (18) depuis le trajet principal (16) à travers l'entrée du trajet secondaire (18) ;
dans lequel une première quantité du fluide caloporteur acheminée vers la seconde source de chaleur (12) et une seconde quantité du fluide caloporteur acheminée vers le dispositif de régulation de flux de fluide (14) sont combinées à la seconde partie et sont ensuite acheminées vers la première source de chaleur (10) pour refroidir la première source de chaleur, et
dans lequel le trajet principal (16) est configuré pour fournir plus de refroidissement à la première source de chaleur (10) que le trajet secondaire (18) est configuré pour fournir à la seconde source de chaleur (12).

2. Le système de refroidissement selon la revendication 1, dans lequel le dispositif de régulation de flux de fluide est un dispositif passif de régulation de flux de fluide et comprend de préférence un bouchon et un ressort.

3. Le système de refroidissement selon la revendication 1, dans lequel le dispositif de régulation de flux de fluide est un dispositif passif de régulation de flux de fluide, et dans lequel le dispositif passif de régulation de flux de fluide comprend une bande élastique et un tube flexible.

4. Le système de refroidissement selon la revendication 1, dans lequel le dispositif de régulation de flux de fluide est un dispositif passif de régulation de flux de fluide, et dans lequel le dispositif passif de régulation de flux de fluide comprend un ou plusieurs clapets couplés à une paroi interne du trajet principal (16).

5. Le système de refroidissement selon la revendication 1, dans lequel le dispositif de régulation de flux de fluide est un dispositif passif de régulation de flux de fluide, et dans lequel le dispositif passif de régulation de flux de fluide comprend une structure qui se dilate et/ou se comprime en réponse à un changement de température pour ajuster une ouverture dans le trajet principal (16).

6. Un véhicule électrique comprenant le système de refroidissement selon la revendication 1, la première source de chaleur (10) refroidie par le trajet principal (16), et la seconde source de chaleur (12) refroidie par le trajet secondaire, dans lequel la première source de chaleur (10) est un dispositif à chaleur élevée et la seconde source de chaleur (12) est un dispositif à chaleur réduite ; et de préférence dans lequel la première source de chaleur (10) comprend une batterie, et la seconde source de chaleur (12) comprend un système électronique de véhicule.

7. Le système de refroidissement selon l'une quelconque des revendications précédentes, dans lequel :
la seconde source de chaleur (12) comprend un canal qui définit au moins une partie du trajet secondaire ; et
le système de refroidissement comprend en outre un dispositif secondaire de régulation de flux de fluide qui est configuré pour empêcher une particule d'entrer dans le trajet secondaire via l'entrée du trajet secondaire, la particule ayant une taille supérieure à une taille du canal de la seconde source de chaleur (12).

8. Le système de refroidissement selon la revendication 7, dans lequel le dispositif secondaire de régulation de flux de fluide comprend un filtre configuré pour filtrer la particule.

9. Le système de refroidissement selon la revendication 7, dans lequel le dispositif secondaire de régulation de flux de fluide est positionné dans le trajet principal (16) en amont de l'entrée du trajet secondaire, de préférence dans lequel le dispositif secondaire de régulation de flux de fluide est configuré pour filtrer la particule.

10. Le système de refroidissement selon la revendication 7, dans lequel le dispositif secondaire de régulation de flux de fluide est positionné dans le trajet principal (16) en amont de l'entrée du trajet secondaire, et dans lequel le dispositif secondaire de régulation de flux de fluide est configuré pour augmenter la vitesse de la particule.

11. Le système de refroidissement selon la revendication 7, dans lequel le dispositif secondaire de régulation de flux de fluide est configuré de sorte que la particule s'écoule à travers le trajet principal (16) au-delà de l'entrée du trajet secondaire.

12. Le système de refroidissement selon la revendication 7, dans lequel la seconde source de chaleur (12) comprend un système électronique qui comprend le canal.

13. Le système de refroidissement selon la revendication 1, comprenant en outre :
un dispositif secondaire de régulation de flux de fluide comprenant un dispositif passif de régulation de flux de fluide configuré pour empêcher une particule dans un fluide caloporteur d'entrer dans le trajet secondaire via l'entrée du trajet secondaire de sorte que la particule s'écoule à travers le trajet principal (16) au-delà de la sortie du trajet secondaire, la particule ayant une taille supérieure à une taille seuil.

14. Le système de refroidissement selon la revendication 13, dans lequel le dispositif passif de régulation de flux de fluide comprend un filtre positionné sur l'entrée du trajet secondaire.

15. Le système de refroidissement selon la revendication 13, dans lequel le dispositif passif de régulation de flux de fluide comprend une structure dans le trajet principal (16) en amont de l'entrée du trajet secondaire, la structure étant configurée pour augmenter une vitesse de la particule.
